# EUROPEAN PATENT APPLICATION

(11) **EP 4 614 203 A1**
(43) Date of publication of application: **10.09.2025**
(21) Application number: 22965237.5
(22) Date of filing: 08.11.2022
(51) Int. Cl.: G02B 7/00, G02B 7/02, G11B 7/1376

(54) **RELATIVE ACTIVE ALIGN APPARATUS**

(71) Applicant: LG Electronics Inc., Yeongdeungpo-gu Seoul 07336 (KR)
(72) Inventor: BAE, Hokyu, Seoul 06772 (KR); CHO, Changhyun, Seoul 06772 (KR); LEE, Joori, Seoul 06772 (KR); CHOI, Daeho, Seoul 06772 (KR); CHUNG, Sehoon, Seoul 06772 (KR)
(74) Representative: Schott, Jakob Valentin
(86) International application number: PCT/KR2022/017425
(87) International publication number: WO 2024/101465

(57) **Abstract**

The present specification relates to an active align apparatus comprising: a support unit which supports a camera module; a screen on which a correction pattern for optical axis correction of a second lens module is formed and which reflects second light corresponding to the incidence range of first light; a gripper unit which transmits the first light and second light and corrects the optical axis of the second lens module; and a control unit which, when a correction pattern image corresponding to the second light is input from the second lens module, controls the optical axis correction of the second lens module according to a location difference value obtained by comparing the correction pattern image with a set reference pattern image, wherein the gripper unit includes transparent glass which transmits the second light, and thus transmits the second light to the second lens module through the transparent glass.

## Description

### Technical field

The disclosure relates to a relative active align apparatus, and more particularly, to a relative active align apparatus for correcting and attaching an optical axis between first and second lens modules included in a laser module.

### Background Art

In general, a laser module may emit laser beams and receive the emitted laser beams.

For example, the laser module may provide a stereoscopic image. The laser module may include a first lens module that emits laser beams and a second lens module that receives the emitted laser beams to generate an image.

After an assembly process of the laser module is performed, an inspection process may be performed by inspection equipment.

Through the assembly process, the first lens module of the laser module may be coupled to a housing with a light-emitting element mounted on a PCB substrate.

The second lens module of the laser module may include a lens barrel having an embedded lens and a lens holder coupled with the lens barrel, and the lens holder may be coupled to the housing with an image sensor mounted on the PCB substrate.

Afterwards, epoxy may be applied and cured between the lens barrel and the lens holder to fix the lens barrel and the lens holder, thereby completing the assembly of the laser module.

An active align apparatus may be used to ensure accurate assembly of the laser module.

The active align apparatus is an assembly apparatus that obtains a plurality of location information with respect to the PCB substrate when assembling the lens holder into the housing, to enable the accurate assembly of the laser module.

The active align apparatus may assemble the laser module in a state that a horizontal of a chart or light source is aligned with a horizontal of the PCB substrate, or may assemble the laser module in a state that the horizontal of the chart or light source is aligned with a horizontal of the lens barrel.

However, as the PCB substrate constructing the laser module and the light-emitting element and image sensor are attached to each other via solder balls, there may be a mounting error between the light-emitting element and image sensor and the PCB substrate, and there may also be a mounting error between the lens and the lens holder.

Therefore, in case of inspecting a camera module after assembling the laser module in the state that the chart or light source is horizontally aligned with the PCB substrate or in the state that the chart or light source is horizontally aligned with the lens barrel, errors may occur in inspection results due to the mounting error of the light-emitting element and image sensor on the PCB substrate and mounting error of the lens holder.

At this time, the errors of the respective first and second lens modules may be corrected through individual processes.

For example, the first lens module may align an optical axis of the light-emitting element based on a camera mounted in a facility, and the second lens module may align an optical axis using a separately installed chart.

However, each of the first and second lens modules is aligned with a different criterion, and thereby an alignment error with respect to the optical axis of each of the first and second lens modules, i.e., the mounting error described above, may occur.

Recently, researches are being conducted to align the optical axes of the first and second lens modules by simultaneously using the first and second lens modules.

In some embodiments, Korean Patent Publication No. 10-2022-0021769 (published on February 22, 2022 (hereinafter, referred to as "prior art literature") discloses a technology for radiating a laser beam from a light-emitting unit to a screen through a glass vacuum chamber, and optically aligning a lens of a light-receiving unit based on a result of receiving a laser beam reflected from the screen.

However, in the case of the prior art literature, there is a concern that a laser beam emitted from the light-emitting unit may affect laser incidence onto the light-receiving unit by being distorted, refracted, or reflected due to a surface of the glass vacuum chamber.

In this case, an accurate lens alignment of the light-receiving unit may be difficult due to inaccurate laser incidence, which may cause limitations in ensuring quality and performance of products.

For example, in the related art, there was a problem with laser emission from the light-emitting unit due to the glass surface, which made it difficult to achieve accurate mounting, thereby causing a problem that the mounting error described above could not be completely suppressed.

### Disclosure of Invention

### Technical Problem

An aspect of the disclosure is to provide a relative active align apparatus that corrects and attaches an optical axis between first and second lens modules included in a laser module.

Another aspect of the disclosure is to provide a relative active align apparatus capable of improving a problem of inaccurate optical axis correction, which results from that a laser beam emitted from a light-emitting unit to a screen is refracted, distorted, or reflected due to a glass surface.

Another aspect of the disclosure is to provide a relative active align apparatus capable of correcting optical axes of first and second lens modules based on a correction pattern image output from the second lens module corresponding to second light incident on a screen by first light emitted from the first lens module during an assembly process of a laser module.

The aspects of the disclosure are not limited to those aspects mentioned above, and other aspects and advantages of the disclosure which are not mentioned will be understood by the following description and will be more clearly understood by the embodiments of the disclosure. Furthermore, it will be readily apparent that the objects and advantages of the disclosure may be achieved by the means set forth in the claims and combinations thereof.

### Solution to Problem

To solve the above-described problems according to an embodiment, a relative active align apparatus is an active align apparatus for correcting an optical axis of a camera module including a first lens module configured to emit first light, and a second lens module spaced apart from the first lens module and configured to receive second light incident thereon. The relative active align apparatus includes a support unit configured to support the camera module, a screen configured to form a correction pattern for correcting an optical axis of the second lens module, and reflect the second light corresponding to an incidence range of the first light, a gripper unit configured to allow the first light and the second light to be transmitted therethrough and correct the optical axis of the second lens module, and a control unit configured to, when a correction pattern image corresponding to the second light is input from the second lens module, control the correction of the optical axis of the second lens module, according to a location difference value obtained by comparing the correction pattern image with a set reference pattern image, wherein the gripper unit includes transparent glass through which the second light is transmitted, the second light transmitted through the transparent glass being incident on the second lens module.

In an embodiment, the correction pattern may include a plurality of spots spaced apart by certain intervals.

In an embodiment, at least one of the plurality of spots may have a different shape and a different contrast.

In an embodiment, the transparent glass may have a shape that includes at least a portion of an incidence range of the second light reflected from the screen.

In an embodiment, the transparent glass may have a shape that does not include an emission range of the first light emitted from the first lens module.

In an embodiment, the transparent glass may be arranged above the second lens module.

In an embodiment, the second lens module may include a lens barrel having an embedded lens, and a lens holder coupled to the lens barrel by epoxy and fixed to a housing to which the first lens module is coupled, and the gripper unit may include a grip portion on which the transparent glass is arranged, and which is configured to grip the lens barrel to correct the optical axis according to the control of the control unit.

In an embodiment, the grip portion may include a gripper configured to grip the lens barrel to correct the optical axis, and a vacuum flow path formed on lower and side portions of the transparent glass and configured to suck up air so that the lens barrel is gripped by the gripper.

In an embodiment, the gripper may be formed on a central axis of the transparent glass.

In an embodiment, when the gripper grips the lens barrel by operation of an external air suction device, the transparent glass may be in contact with an exposed upper portion of the vacuum flow path to block a space between the vacuum flow path and the transparent glass.

In an embodiment, when the gripper grips the lens barrel, the transparent glass may be spaced apart from the lens barrel by a certain distance.

In an embodiment, the control unit may include an operation part configured to operate the first lens module to emit the first light, a location determination part configured to determine the location difference value by comparing the correction pattern image input from the second lens module and the reference pattern image, and a controller configured to control such that the optical axis of the second lens module is corrected according to the location difference value.

In an embodiment, the reference pattern image may be an image corresponding to the correction pattern formed in the incidence range of the first light.

In an embodiment, the location determination part may determine whether the optical axis has been deflected to at least one of an up/down direction and a left/right direction by comparing a plurality of spots included in the correction pattern image with a plurality of reference spots included in the reference pattern image, and determine the location difference value according to the deflection direction and a distance.

In an embodiment, the location determination part may determine whether the optical axis has been deflected by extracting a first length and a first number of spots in a first direction and a second length and a second number of spots in a second direction crossing the first direction, from the plurality of spots, and comparing the first and second lengths and the first and second numbers of spots with first and second reference lengths and first and second numbers of reference spots in the first and second directions, which are set in the plurality of reference spots.

In an embodiment, the location determination part may determine that the optical axis has been deflected in the first direction when the first length is shorter than the first reference length and the first number of spots is smaller than the first number of reference spots, and determine the location difference value to move in an opposite direction to the first direction according to a difference value between the first length and the first reference length.

In an embodiment, the location determination part may determine that the optical axis has been deflected in the second direction when the second length is shorter than the second reference length and the second number of spots is smaller than the second number of reference spots, and determine the location difference value to move in an opposite direction to the second direction according to a difference value between the second length and the second reference length.

In an embodiment, the controller may control the gripper unit so that the optical axis of the second lens module is corrected in a first direction and a second direction crossing the first direction according to the location difference value.

In an embodiment, the relative active align apparatus may further include a lens unit configured to vary refractive indexes of the first light and the second light between the support unit and the screen.

In an embodiment, the lens unit may include a collimator lens for distance adjustment.

### Advantageous Effects of Invention

A relative active align apparatus according to the disclosure has advantages of simplifying a manufacturing process and reducing mounting errors by simultaneously correcting optical axes of first and second lens modules during an assembly process of a laser module.

In particular, the relative active align apparatus according to the disclosure has an effect of suppressing a laser beam emitted from a light-emitting unit from being refracted, distorted, or reflected by a surface of transparent glass, by arranging the transparent glass only on the side of a light-receiving unit so that only a laser beam incident on the light-receiving unit is transmitted.

Accordingly, the relative active align apparatus according to the disclosure may achieve stable laser reception of the light-receiving unit by suppressing a laser reception distortion of the light-receiving unit due to the refraction, distortion, or reflection of the laser beam emitted from the light-emitting unit.

The relative active align apparatus according to the disclosure may also expect an effect of achieving an accurate optical alignment of the light-emitting unit and the light-receiving unit by enabling stable laser reception of the light-receiving unit.

Accordingly, the relative active align apparatus according to the disclosure may not only ensure the quality and performance of a product, but also increase the reliability of product manufacturing.

The relative active align apparatus according to the disclosure may have an advantage of not using a separate chart for optical axis correction of a second lens module by utilizing second light incident by first light emitted from a first lens module.

Various effects other than those effects described above may be directly or implicitly disclosed in the detailed description according to the embodiments of the disclosure to be described later.

### Brief Description of Drawings

FIG. 1 is a control block diagram of a control configuration of a relative active align apparatus according to the disclosure.
FIG. 2 is an exemplary diagram for explaining an operation of a relative active align apparatus according to the disclosure.
FIG. 3 is an exemplary diagram of an example of a correction pattern formed on a screen illustrated in FIG. 1.
FIG. 4 is an exemplary diagram for explaining an operation of a location determination part illustrated in FIG. 1.
FIG. 5 is a view of a first embodiment of a gripper unit illustrated in FIG. 1.
FIG. 6 is a view of a second embodiment of a gripper unit illustrated in FIG. 1.

### Mode for the Invention

It should be noted that in the following description, only essential parts necessary for understanding the embodiments of the disclosure will be described, and descriptions of other parts will be omitted to suppress distraction from the gist of the disclosure.

The terms or words used in the disclosure and claims described below should not be interpreted as limited to their usual or dictionary meanings, but should be interpreted as meanings and concepts that conform to the technical idea of the disclosure, based on the principle that the inventor may appropriately define the meanings of the terms for explaining his or her own invention in the best way. Therefore, the embodiments described herein and the configurations illustrated in the drawings are only preferred embodiments of the disclosure and do not represent all of the technical ideas of the disclosure. Therefore, it should be understood that there may be various equivalents and modified examples that may replace them at the time of filing this application.

Hereinafter, an embodiment of the disclosure will be described in more detail with reference to the attached drawings.

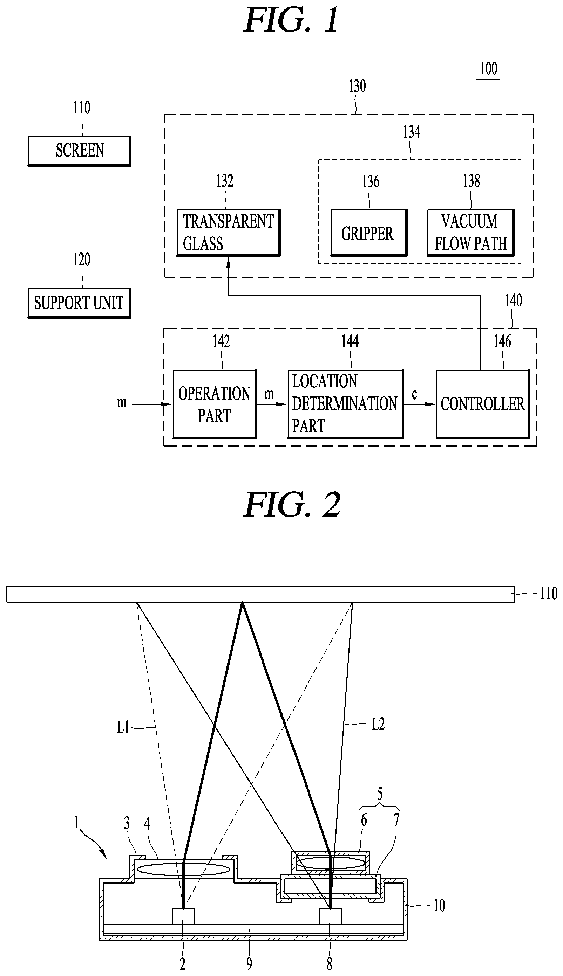

FIG. 1 is a control block diagram of a control configuration of a relative active align apparatus according to the disclosure, and FIG. 2 is an exemplary diagram for explaining an operation of a relative active align apparatus according to the disclosure.

Referring to FIGS. 1 and 2, a relative active align apparatus 100 may include a screen 110, a support unit 120, a gripper unit 130, and a control unit 140.

First, the screen 110 may cause second light L2, which belongs to an incidence range of first light L1 emitted from a laser module 1, to be incident on a laser module 2.

In an embodiment, the first light L1 may be a laser beam, and the second light L2 may be an emitted laser beam, but are not limited thereto.

A correction pattern for correcting an optical axis may be formed on a lower surface of the screen 110 in an upward direction of the laser module 1.

Here, the correction pattern may include a plurality of spots each having different contrast, but is not limited thereto.

The plurality of spots may be spaced apart at certain intervals and may have different shapes and different contrasts, but are not limited thereto.

The plurality of spots may be classified into a plurality of spot groups.

At this time, when a lower surface of the screen 110 has low reflectivity, the second light L2 may have too low brightness to create an image, and when having high reflectivity, it may be easy to create an image of the second light L2 but may cause a generation of a noise image for a part other than a correction pattern.

For example, to find a Z-axis value of the best focusing point, an active alignment may be performed to determine the Z-axis value of the best focusing point through image resolution analysis (quantifying the degree to which an image is blurry due to being out of focus) and to calculate a tilt correction value.

Therefore, when reflectivity is low, it may be difficult to perform the resolution analysis due to insufficient image brightness, and when reflectivity is high, it may be difficult to perform the resolution analysis doe to generation of a noise image.

In an embodiment, the active align apparatus 110 may have an interior that is implemented as a blackout curtain with a reflectivity of 5% by a housing.

The support unit 120 may support the laser module 1.

First, the laser module 1 may include a first lens module 3, a second lens module 5, and a printed circuit board (PCB) substrate 9.

The first lens module 3 may include a first lens 4 arranged above a light-emitting element 2 mounted on the PCB substrate 9 and may be coupled to a housing 10.

Here, the first lens 4 may output the first light L1 emitted from the light-emitting element 2 to the screen 110.

At this time, the first lens 4 may diffuse the first light L1 along a set optical axis.

The second lens module 5 may include a lens barrel 6 in which a second lens is embedded, and a lens holder 7 coupled to the lens barrel 6 by epoxy and fixed to the housing 10.

At this time, the second lens module 5 may be positioned above an image sensor 8 which is mounted on the PCB substrate 9.

The support unit 120 may support the laser module 1 so that the laser module 1 remains horizontal.

The gripper unit 130 may include a transparent glass 132 and a grip portion 134.

The transparent glass 132 may transmit the second light L2 incident on the second lens module 5.

For example, the transparent glass 132 may not participate in the emission of the first light L1 but may transmit only the second light L2.

The transparent glass 132 may have a shape that includes at least a portion of an incidence range of the second light L2 reflected from the screen 110.

The transparent glass 132 may also have a shape that does not include an emission range of the first light L1 emitted from the first lens module 3.

The transparent glass 132 may preferably include the incidence range of the second light L2, and may have an area in which the emission range of the first light L1 is not included.

The transparent glass 132 may be positioned above the second lens module 5.

Accordingly, the first light L1 may not be transmitted through the transparent glass 132, and only the second light L2 may be transmitted through the transparent glass 132.

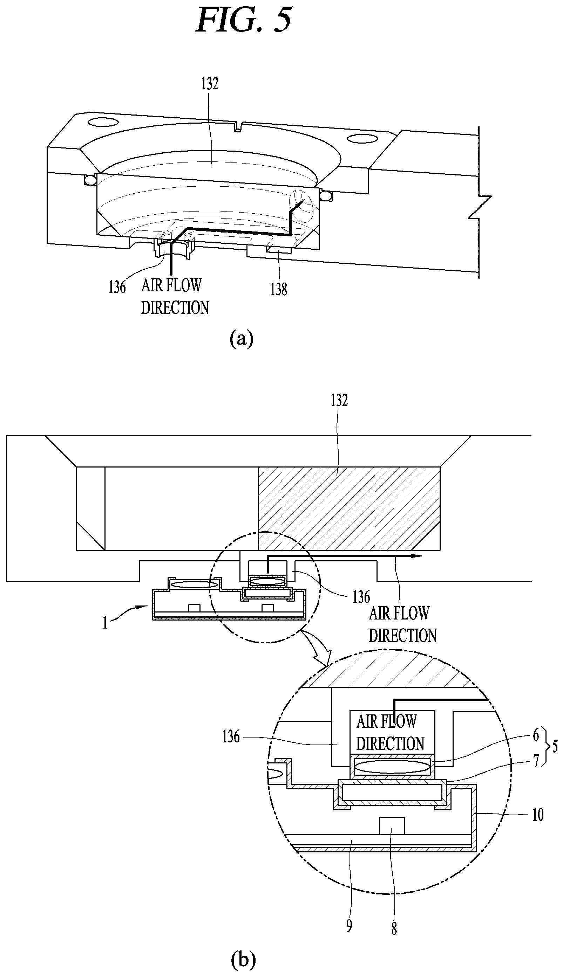

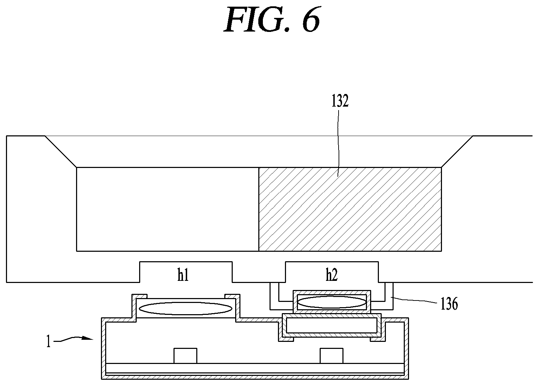

For example, as illustrated in FIGS. 5 and 6, the transparent glass 132 may be arranged only above the second lens module 5 on which the second light L2 is incident, such that the first light L1 is not transmitted but the second light L2 is merely transmitted therethrough.

At this time, the transparent glass 132 may include a glass material and may include a material with a very low refractive index.

The transparent glass 132 may be spaced apart from the lens barrel 5 by a certain distance.

The grip portion 134 may include a gripper 136 and a vacuum flow path 138.

The gripper 136 may grip the lens barrel 6. For example, the gripper 136 may grip the lens barrel 6 by sucking up air, or may grip the lens barrel 6 by contacting the lens barrel 6 in a direction from top to bottom, but is not limited thereto.

The gripper 136 may have the transparent glass 132 arranged thereon and may correct an optical axis while holding the lens barrel 6. The gripper 136 may be formed on a central axis of the transparent glass 132.

The vacuum flow path 138 may be formed in the gripper 136 where the transparent glass 132 is arranged, and may be formed to suck up air so that the lens barrel 6 is gripped.

For example, when the gripper 136 grips the lens barrel 6 in response to an operation of an external air suction device, the vacuum flow path 138 may be brought into contact with an upper portion of the lens barrel 6, which is exposed by the transparent glass 132, resulting in blocking a space between the vacuum flow path 138 and the transparent glass 132.

The control unit 140 may include an operation part (or operation unit) 142, a location determination part (or location determination unit) 144, and a controller 146.

The operation part 142 may operate the first lens module 3 by supplying power to the light-emitting element 2 to emit the first light L1.

The operation part 142 may receive a correction pattern image m, which corresponds to the second light L2 reflected by the screen 110, from the image sensor 8 and transmit the received correction pattern image m to the location determination part 144.

The location determination part 144 may determine a location coordinate value c by comparing the correction pattern image m with a set reference pattern image.

The reference pattern image may be an image having the correction pattern set in response to the second light L2 when the first light L1 is incident.

For example, the reference pattern image may be an image for the correction pattern in a state where optical axes of the first and second lens modules 3, 5 have been corrected.

The location determination part 144 may compare a plurality of spots included in the correction pattern image m with a plurality of reference spots included in the reference pattern image, to determine the location coordinate value c corresponding to a deflection direction of an optical axis and a difference between position coordinates.

For example, the location determination part 144 may extract a first length and a first number of spots in a first direction and a second length and a second number of spots in a second direction crossing the first direction, from the plurality of spots. The location determination part 144 may compare the first and second lengths and the first and second numbers of spots with first and second reference lengths and first and second numbers of reference spots in the first and second directions, which are set in the plurality of reference spots, thereby determining whether the optical axis has been deflected.

The location determination part 144 may determine that the optical axis has been deflected in the first direction when the first length is shorter than the first reference length and the first number of spots is smaller than the first number of reference spots, and may determine the location difference value to move in an opposite direction to the first direction according to a difference value between the first length and the first reference length.

In another example, the location determination part 144 may determine that the optical axis has been deflected in the second direction when the second length is shorter than the second reference length and the second number of spots is smaller than the second number of reference spots, and may determine the location difference value to move in an opposite direction to the second direction according to a difference value between the second length and the second reference length.

The controller 146 may move the gripper unit 130 so that the optical axis of the second lens module 5 is corrected according to the location coordinate value c determined by the location determination part 144.

The active align apparatus 100 may further include a lens unit (not illustrated) that is arranged between the screen 110 and the support unit 120 to vary refractive indexes of the first light L1 and the second light L2.

Here, the lens unit 150 may include a collimator lens for distance adjustment.

The lens unit may reduce a distance between the screen 110 and the support unit 120, thereby reducing the size of the active align apparatus 100.

As described above, the active align apparatus 100 according to the disclosure may correct the optical axis of the second lens module 5 using the correction pattern image c corresponding to the second light L2 according to the incidence range of the first light L1 emitted from the first lens module 3, thereby achieving the advantage of simultaneously reducing the error for the optical axis between the first and second lens modules 3 and 5.

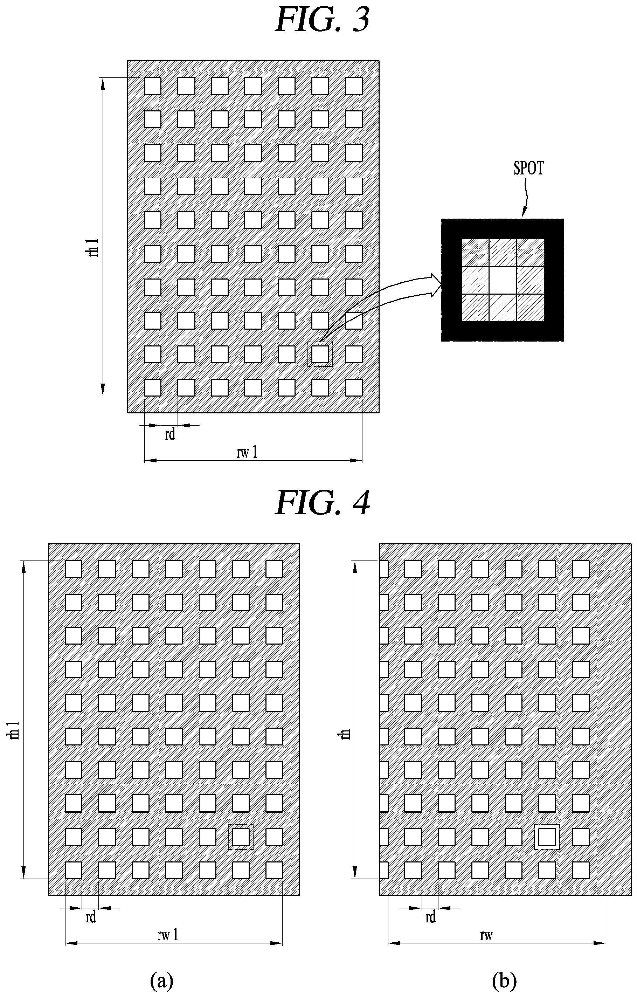

FIG. 3 is an exemplary diagram of an example of a correction pattern formed on a screen illustrated in FIG. 1.

Referring to FIG. 3, the screen 110 may form a correction pattern in which a plurality of spot groups including a plurality of spots are spaced apart at certain intervals.

Here, each of the plurality of spots may include nine pixels each having a different contrast, namely, brightness, but is not limited thereto.

The correction pattern illustrated in FIG. 3 is only one example and may be formed into other patterns and is not limited thereto.

The plurality of spots may be formed with the same width and inter-spot distance rd, but are not limited thereto.

FIG. 4 is an exemplary diagram for explaining an operation of the location determination part illustrated in FIG. 1.

Referring to FIG. 4, the location determination part 144 may determine a location coordinate value c by comparing a correction pattern image m with a reference pattern image.

(a) of FIG. 4 illustrates the reference pattern image. Here, the plurality of spots may have a first reference spot length rw1 and a first number of reference spots (not shown) in a first direction, and a second reference spot length rh1 and a second number of reference spots (not shown) in a first direction crossing the first direction.

The plurality of spots may be spaced apart by certain intervals rd.

(b) FIG. 4 may illustrate the correction pattern image m.

In this instance, the location determination part 144 may check a first length rw and a first number of spots (not shown) in a first direction and a second length rh and a second number of spots (not shown) in a second direction crossing the first direction, in the plurality of spots included in the correction pattern image m.

Thereafter, the location determination part 144 may compare the first and second lengths rw and rh and the first and second numbers of spots with the first and second reference spot lengths rw1 and rh1 and the first and second numbers of reference spots of (a) of FIG. 4.

Here, based on (a) and (b) of FIG. 4, the location determination part 144 may determine that the optical axis of the second lens module 5 has been deflected in the first direction when the first length rw is shorter than the first reference spot length rw1 and the first number of spots is smaller than the first number of reference spots.

In this instance, the location determination part 144 may calculate a difference value between the first length rw and the first reference spot length rw1 based on the certain interval rd between the plurality of spots.

The location determination part 144 may determine a location difference value c so that the optical axis moves in the opposite direction to the first direction according to the difference value.

The location coordinate value c may be a value for the correction of the optical axis of the second lens module 5.

FIG. 5 is a view of a first embodiment of a gripper unit illustrated in FIG. 1.

Referring to FIG. 5, the gripper unit 130 may include transparent glass 132 and a grip portion 134.

First, (a) of FIG. 5 is a cross-sectional perspective view of the gripper unit 130, and (b) of FIG. 5 is a cross-sectional view of the gripper unit 130.

Referring to (a) and (b) of FIG. 5, the transparent glass 132 may form a trapezoidal cross-section to define a vacuum flow path 138 through which air moves to allow the gripper 136 included in the grip portion 136 to grip the lens barrel 6.

Here, the transparent glass 132 may be formed to transmit only the second light L2 that is reflected from the screen 110 to be incident on the second lens module 5.

For example, the transparent glass 132 may be formed with a size and at a position where the incidence range of the second light L2 is included, so that the second light L2 may be transmitted therethrough.

Accordingly, the first light L1 may be emitted to the screen 110 without being transmitted through the transparent glass 132, thereby suppressing the refraction, distortion, or reflection of the first light L1 on the surface of the transparent glass 132.

This may suppress a phenomenon that the first light L1 affects the reception of the second light L2 by being refracted, distorted, or reflected on the surface of the transparent glass 132, allowing accurate reception of the second light L2.

When the gripper 136 sucks up air to grip the lens barrel 6, the transparent glass 132 may adhere to an exposed upper surface of the vacuum flow path 138, thereby blocking a space between the vacuum flow path 138 and the transparent glass 132.

In this instance, the air sucked up through the gripper 136 may be discharged to the external air suction device through an air suction port, which is formed through a side surface, along the vacuum flow path 138, and is not limited to this.

FIG. 6 is a view of a second embodiment of a gripper unit illustrated in FIG. 1.

Referring to FIG. 6, the gripper unit 130 may include transparent glass 132 and a grip portion 134.

The gripper unit 130 illustrated in FIG. 6, unlike the example illustrated in FIG. 5, may grip the lens barrel 6 with mechanical force rather than by sucking up air.

The transparent glass 132 may transmit the second light L2 reflected from the screen 110 to the second lens module 5.

At this time, the transparent glass 132 may include a glass material and may include a material with a very low refractive index.

The grip portion 134 may include first and second holes h1 and h2, to which the gripper 136 is coupled and through which the transparent glass 132 transmits the first light L1 and the second light L2.

The grip portion 134 may operate the gripper 136 under the control of the control unit 140, but is not limited thereto.

Here, the first hole h1 may be located on the first lens module 3, and the second hole h2 may be located on the second lens module 5.

A diameter of the second hole h2 may be equal to or greater than a diameter of the first hole h1, and the first and second holes h1 and h2 may be equally spaced from each other based on the center of the transparent glass 132.

The gripper unit 130 may grip the side surface of the second lens module 5 by lowering the gripper 136 from upper side to lower side of the second lens module 5.

The features, structures, effects, and the like described in the embodiments above are included in at least one embodiment of the disclosure, and are not necessarily limited to only one embodiment. Furthermore, the features, structures, effects, and the like illustrated in each embodiment may be implemented by those skilled in the art by combining or modifying other embodiments. Therefore, the contents related to these combinations and modifications should be interpreted as being included within the scope of the disclosure.

Although the above description has been made focusing on embodiments, these are merely illustrative and do not limit the disclosure, and it may be understood by those skilled in the art to which the disclosure pertains that that various modifications and applications not illustrated above are possible without departing from the essential characteristics of the embodiments. For example, each component specifically shown in the embodiment may be implemented by being modified. The differences relating to these modifications and applications should be construed as being included within the scope of the disclosure as defined in the appended claims.

## Claims

1. A relative active align apparatus for correcting an optical axis of a camera module comprising a first lens module configured to emit first light, and a second lens module spaced apart from the first lens module and configured to receive second light incident thereon, the relative active align apparatus comprising:
a support unit configured to support the camera module;
a screen configured to form a correction pattern for correcting an optical axis of the second lens module, and reflect the second light corresponding to an incidence range of the first light;
a gripper unit configured to allow the first light and the second light to be transmitted therethrough and correct the optical axis of the second lens module; and
a control unit configured to, when a correction pattern image corresponding to the second light is input from the second lens module, control the correction of the optical axis of the second lens module according to a location difference value obtained by comparing the correction pattern image with a set reference pattern image,
wherein the gripper unit
comprises transparent glass through which the second light is transmitted, the second light transmitted through the transparent glass being incident on the second lens module.

2. The relative active align apparatus of claim 1, wherein
the correction pattern comprises a plurality of spots spaced apart at certain intervals.

3. The relative active align apparatus of claim 2, wherein
at least one of the plurality of spots has a different shape and a different contrast.

4. The relative active align apparatus of claim 1, wherein
the transparent glass has a shape that includes at least a portion of an incidence range of the second light reflected from the screen.

5. The relative active align apparatus of claim 1, wherein
the transparent glass has a shape that does not include an emission range of the first light emitted from the first lens module.

6. The relative active align apparatus of claim 1, wherein
the transparent glass is located above the second lens module.

7. The relative active align apparatus of claim 1, wherein
the second lens module comprises a lens barrel having an embedded lens, and a lens holder coupled to the lens barrel by epoxy and fixed to a housing to which the first lens module is coupled, and
the gripper unit comprises a grip portion on which the transparent glass is arranged, and which is configured to grip the lens barrel to correct the optical axis according to the control of the control unit.

8. The relative active align apparatus of claim 7, wherein
the grip portion comprises:
a gripper configured to grip the lens barrel to correct the optical axis; and
a vacuum flow path formed on lower and side portions of the transparent glass and configured to suck up air so that the lens barrel is gripped by the gripper.

9. The relative active align apparatus of claim 8, wherein
the gripper is arranged on a central axis of the transparent glass.

10. The relative active align apparatus of claim 8, wherein
when the gripper grips the lens barrel by operation of an external air suction device,
the transparent glass is in contact with an exposed upper portion of the vacuum flow path to block a space between the vacuum flow path and the transparent glass.

11. The relative active align apparatus of claim 8, wherein
when the gripper grips the lens barrel,
the transparent glass is spaced apart from the lens barrel by a certain distance.

12. The relative active align apparatus of claim 1, wherein
the control unit comprises:
an operation part configured to operate the first lens module to emit the first light;
a location determination part configured to determine the location difference value by comparing the correction pattern image input from the second lens module and the reference pattern image; and
a controller configured to control such that the optical axis of the second lens module is corrected according to the location difference value.

13. The relative active align apparatus of claim 12, wherein
the reference pattern image is an image corresponding to the correction pattern formed in the incidence range of the first light.

14. The relative active align apparatus of claim 12, wherein
the location determination part determines whether the optical axis has been deflected to at least one of an up/down direction and a left/right direction by comparing a plurality of spots included in the correction pattern image with a plurality of reference spots included in the reference pattern image, and determines the location difference value according to the deflection direction and a distance.

15. The relative active align apparatus of claim 14, wherein
the location determination part 144 determines whether the optical axis has been deflected by extracting a first length and a first number of spots in a first direction and a second length and a second number of spots in a second direction crossing the first direction, from the plurality of spots, and comparing the first and second lengths and the first and second numbers of spots with first and second reference lengths and first and second numbers of reference spots in the first and second directions, which are set in the plurality of reference spots.

16. The relative active align apparatus of claim 15, wherein
the location determination part determines that the optical axis has been deflected in the first direction when the first length is shorter than the first reference length and the first number of spots is smaller than the first number of reference spots, and determines the location difference value to move in an opposite direction to the first direction according to a difference value between the first length and the first reference length.

17. The relative active align apparatus of claim 15, wherein
the location determination part determines that the optical axis has been deflected in the second direction when the second length is shorter than the second reference length and the second number of spots is smaller than the second number of reference spots, and determines the location difference value to move in an opposite direction to the second direction according to a difference value between the second length and the second reference length.

18. The relative active align apparatus of claim 12, wherein
the controller controls the gripper unit so that the optical axis of the second lens module is corrected in a first direction and a second direction crossing the first direction according to the location difference value.

19. The relative active align apparatus of claim 1, further comprising
a lens unit configured to vary refractive indexes of the first light and the second light between the support unit and the screen.

20. The relative active align apparatus of claim 19, wherein
the lens unit comprises a collimater lens for distance adjustment.
